(19) Europäisches Patentamt / European Patent Office / Office européen des brevets

(11) **EP 4 455 212 A1**

(12) **EUROPEAN PATENT APPLICATION**
published in accordance with Art. 153(4) EPC

(43) Date of publication:
**30.10.2024 Bulletin 2024/44**

(21) Application number: **23820126.3**

(22) Date of filing: **09.06.2023**

(51) International Patent Classification (IPC):
**C08L 67/04** (2006.01)    **C08L 67/02** (2006.01)
**C08L 3/02** (2006.01)     **C08J 5/18** (2006.01)

(52) Cooperative Patent Classification (CPC):
**B29B 9/12; B29B 7/726; B29B 7/82; B29B 7/92;
C08J 5/18; C08L 3/02; C08L 67/02; C08L 67/04;**
B29B 7/183; B29B 7/42; B29B 7/48; B29B 9/06

(86) International application number:
**PCT/KR2023/007910**

(87) International publication number:
**WO 2023/239191 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.06.2022 KR 20220070913
08.06.2023 KR 20230073707**

(71) Applicant: **LG Chem, Ltd.
Yeongdeungpo-gu
Seoul 07336 (KR)**

(72) Inventors:
• **PARK, Hyunwoo
  Daejeon 34122 (KR)**

• **SHIM, Hong Shik
  Daejeon 34122 (KR)**
• **JEON, Kwang Seoung
  Daejeon 34122 (KR)**
• **YUN, Haesung
  Daejeon 34122 (KR)**
• **CHO, Beomshin
  Daejeon 34122 (KR)**
• **KANG, Sunah
  Daejeon 34122 (KR)**
• **KIM, Gi Hong
  Daejeon 34122 (KR)**
• **JE, Hwaheon
  Daejeon 34122 (KR)**

(74) Representative: **Plasseraud IP
104 Rue de Richelieu
CS92104
75080 Paris Cedex 02 (FR)**

(54) **BIODEGRADABLE COMPOSITION AND BIODEGRADABLE FILM**

(57) The present invention provides a biodegradable composition and a biodegradable film, each comprising polybutylene adipate terephthalate(PBAT), a thermoplastic starch, and polybutylene adipate terephthalate(PBAT) grafted with starch maleate.

**Description**

**FIELD OF THE INVENTION**

CROSS-REFERENCE TO RELATED APPLICATION(S)

This application claims the benefit of Korean Patent Application No. 10-2022-0070913 filed on June 10, 2022 and Korean Patent Application No. 10-2023-0073707 filed on June 8, 2023 in the Korean Intellectual Property Office, the disclosures of which are incorporated herein by reference in their entirety.

The present invention relates to a biodegradable composition and a biodegradable film.

**BACKGROUND OF THE INVENTION**

Recently, as interest in environmental protection and eco-friendliness has increased quickly, the need for methods of cultivating environmentally-friendly agricultural crops is increasing. Mulching farming method is known as one of these environmentally-friendly farming methods. When cultivating agricultural crops, this is a method in which the surface of the soil is covered with a mulching film, etc., thereby preventing the growth of weeds, preventing pests, maintaining soil moisture or regulating soil temperature, preventing soil erosion by rainwater in a rainy weather, and reducing the use of pesticides.

Mulching films used in such mulching farming methods greatly contribute to the productivity of agricultural crops, but there are difficulties in collecting and recycling them after use. Usually, synthetic resins such as polypropylene and polyethylene are used and biodegradable ingredients are added as additives to impart biodegradability, but in reality, biodegradation of the synthetic resin itself is impossible. Further, there is a problem that synthetic resins that are left without being biodegraded contaminate the soil.

Thus, attempts have been made to produce mulching films using polybutylene adipate terephthalate(PBAT), which is a biodegradable plastic. However, polybutylene adipate terephthalate(PBAT) has high elongation, while there is a problem that mechanical properties such as Young's modulus are lower than those of existing films such as polyethylene. Further, since polybutylene adipate terephthalate (PBAT) is a 100% petroleum-based material, it has a low bio-material content.

Thus, attempts have been made to improve the physical properties and increase the content of bio raw materials by compounding various biodegradable materials with polybutylene adipate terephthalate(PBAT). However, there is a problem that compatibility between polybutylene adipate terephthalate and other biodegradable materials is low, which results in poor tensile properties.

**SUMMARY OF THE INVENTION**

**TECHNICAL PROBLEM**

It is an object of the present invention to provide a biodegradable composition and a biodegradable film which are excellent in excellent tensile properties such as tensile strength, elongation at break, and Young's modulus, and increased in the content of bio raw materials.

**TECHNICAL SOLUTION**

According to one embodiment of the present invention, there is provided a biodegradable composition comprising: polybutylene adipate terephthalate(PBAT), a thermoplastic starch, and polybutylene adipate terephthalate(PBAT) grafted with starch maleate.

According to another embodiment of the present invention, there is provided a biodegradable film comprising: polybutylene adipate terephthalate(PBAT), a thermoplastic starch, and polybutylene adipate terephthalate(PBAT) grafted with starch maleate.

Now, a biodegradable composition and a biodegradable film according to specific embodiments of the invention will be described in more detail.

Unless particularly mentioned herein, the term "including" or "containing" refers to including some element (or component) without any limitation, and should not be construed as excluding addition of other elements (or components).

Throughout the description, the term "polylactic acid prepolymer" refers to polylactic acid having a weight average molecular weight of 1,000 to 50,000 g/mol, which is obtained by oligomerizing lactic acid.

Throughout the description, the term "poly(3-hydroxypropionate)prepolymer" refers to poly(3-hydroxypropionate) having a weight average molecular weight of 1,000 to 50,000 g/mol, which is obtained by oligomerizing 3-hydroxypropionate.

Further, unless otherwise stated herein, the weight average molecular weight of polylactic acid prepolymer, poly(3-hydroxypropionate) prepolymer, and copolymer can be measured using a gel permeation chromatography(GPC). Specifically, the prepolymer or copolymer is dissolved in chloroform to a concentration of 2 mg/ml, then 20 μl of the dissolved polymer is injected into GPC, and GPC analysis is performed at 40°C. At this time, chloroform is used as the mobile phase for GPC, the flow rate is 1.0 mL/min, and the column used is two Agilent Mixed-B units connected in series. RI Detector is used as a detector. The values of Mw can be obtained using a calibration curve formed using a polystyrene standard sample. Nine kinds of the polystyrene standard samples are used with the molecular weight of 2,000 g/mol, 10,000 g/mol, 30,000 g/mol, 70,000 g/mol, 200,000 g/mol, 700,000 g/mol, 2,000,000 g/mol, 4,000,000 g/mol, and 10,000,000 g/mol.

Conventionally, the composition for producing a biodegradable film included only polybutylene adipate terephthalate, or polybutylene adipate terephthalate was compounded with other biodegradable materials to produce a film, but when only the polybutylene adipate terephthalate is used, there is a problem that mechanical properties such as Young's modulus are low and the content of bio raw materials is also low, and when polybutylene adipate terephthalate is compounded with other biodegradable materials, there is a problem that the compatibility between the materials is low, and thus, the tensile properties of the film are low.

Therefore, the present inventors have found that in the case of a biodegradable composition comprising: polybutylene adipate terephthalate(PBAT), a thermoplastic starch, and polybutylene adipate terephthalate(PBAT) grafted with starch maleate, the compatibility between materials is excellent and thus, the tensile properties of the film produced therefrom, such as tear strength, tensile strength, elongation at break, and Young's modulus, are also excellent, and completed the present invention.

Further, the biodegradable composition may include a hydroxyalkanoate-lactide copolymer, wherein the hydroxyalkanoate-lactide copolymer contains a large amount of bio raw materials and also exhibits environmentally friendless and biodegradable characteristics, and thus, a biodegradable film produced from a composition containing the same can also contain a large amount of bio raw materials even while maintaining environmentally friendless and biodegradable characteristics.

According to one embodiment of the present invention, there is provided a biodegradable composition comprising: polybutylene adipate terephthalate(PBAT), a thermoplastic starch, and polybutylene adipate terephthalate(PBAT) grafted with starch maleate.

The polybutylene adipate terephthalate(PBAT) is a biodegradable resin and may be included in an amount of 30 to 90% by weight, and more specifically, in an amount of 30% by weight or more, 35% by weight or more, 40% by weight or more, or 90% by weight or less, 80% by weight or less, 75% by weight or less, and 70% by weight or less, based on the total 100% by weight of the biodegradable composition.

If the polybutylene adipate terephthalate(PBAT) is included in an excessively small amount in the biodegradable composition, the elongation may be lowered, and if polybutylene adipate terephthalate (PBAT) is included in an excessively large amount in a biodegradable composition, the tensile properties such as Young's modulus and yield tensile strength may be reduced.

The biodegradable composition may include thermoplastic starch to increase the processability of polybutylene adipate terephthalate and speed up the biodegradation rate.

The thermoplastic starch may be a starch imparted with thermoplasticity in which a plasticizer is added to starch, which is a natural polymer, and thus does not carbonize at a prescribed temperature or higher and can freely change its shape, like existing general-purpose resins such as polyethylene, polystyrene, and polypropylene.

The thermoplastic starch may comprise at least one selected from the group consisting of rice starch, wheat starch, corn starch, sweet potato starch, potato starch, tapioca starch, cassava starch and modified starch thereof.

Further, the plasticizer contained in starch, which is a natural polymer, may be at least one selected from the group consisting of isosorbide, glycerol, sorbitol, fructose, formamide, xylitol, corn oil, and edible oil.

The plasticizer may be included in an amount of 5% by weight or more and 50% by weight or less, 10% by weight or more and 45% by weight or less, or 15% by weight or more and 35% by weight or less, based on the total 100% by weight of the thermoplastic starch.

The thermoplastic starch may be included in an amount of 10 to 70% by weight, and more specifically, in an amount of 10% by weight or more, 15% by weight or more, or 20% by weight or more, or 70% by weight or less, 60% by weight or less, and 50% by weight or less, based on the total 100% by weight of the biodegradable composition.

If the thermoplastic starch is included in an excessively small amount in the biodegradable composition, the biodegradation rate may become slow, and the tensile properties such as Young's modulus and yield tensile strength of the film using the starch may be reduced, and if the thermoplastic starch is included in an excessively large amount in the biodegradable composition, the elongation may be lowered.

The weight ratio of the thermoplastic starch and polybutylene adipate terephthalate(PBAT) included in the biodegradable composition according to one embodiment may be 5:95 to 50:50, 5:95 to 40:60, or 10:90 to 30:70.

If the polybutylene adipate terephthalate(PBAT) is included in an excessively small amount compared to the thermoplastic starch, the elongation may be lowered, and if the polybutylene adipate terephthalate(PBAT) is included in an excessively large amount compared to the thermoplastic starch, the biodegradation rate may become slow and the tensile properties such as Young's modulus and yield tensile strength may be lowered.

The biodegradable composition according to one embodiment may include polybutylene adipate terephthalate(PBAT) grafted with starch maleate.

The polybutylene adipate terephthalate(PBAT) grafted with starch maleate may be included as a compatibilizer that improves the binding force and thus improves the mechanical properties of the polybutylene adipate terephthalate (PBAT), hydroxyalkanoate-lactide copolymer and/or thermoplastic starch. The polybutylene adipate terephthalate(PBAT) grafted with starch maleate can function as a chain extender to increase molecular weight, increase melt viscosity, and improve formability such as stretchability.

The polybutylene adipate terephthalate(PBAT) grafted with starch maleate may be different in that maleic acid starch is grafted, unlike the polybutylene adipate terephthalate(PBAT).

The starch maleate may be a monomer or oligomer formed by performing an esterification of the hydroxyl group of starch and the carboxyl group of maleic acid. The starch maleate may have a weight average molecular weight of 1,000 or more and 50 million or less, 10,000 or more and 30 million or less, 50,000 or more and 10 million or less, and 100,000 or more and 10 million or less. If the weight average molecular weight of the starch maleate is too small, it may be difficult to use it as a compatibilizer with other compositions, and if the weight average molecular weight of the starch maleate is too large, the tensile properties such as tear strength may be reduced.

The grafting rate of starch maleate of the polybutylene adipate terephthalate(PBAT) grafted with starch maleate may be 0.1 to 10.0% by weight, 0.2 to 9.0% by weight, 0.3 to 5.0% by weight, 0.4 to 3.0% by weight, or 0.5 to 1.0% by weight. As the grafting rate of starch maleate of the polybutylene adipate terephthalate(PBAT) grafted with starch maleate within the above-mentioned range, the tensile properties such as tear strength and formability of the biodegradable film produced from the biodegradable composition can be improved.

The polybutylene adipate terephthalate(PBAT) grafted with starch maleate may be included in an amount of 0.1 to 10 parts by weight, and more specifically, in an amount of 0.1 parts by weight or more, 0.2 parts by weight or more, or 0.3 parts by weight or more, or 10 parts by weight or less, 5 parts by weight or less, and 3 parts by weight or less, based on 100 parts by weight of the biodegradable composition.

If the polybutylene adipate terephthalate(PBAT) grafted with starch maleate is included in an excessively small amount in the biodegradable composition, the mechanical properties are not improved, and if the polybutylene adipate terephthalate(PBAT) grafted with starch maleate is included in an excessively large amount in the biodegradable composition, the melt viscosity may increase excessively and the formability may be reduced.

Further, the biodegradable composition according to one embodiment may further include a hydroxyalkanoate-lactide copolymer.

The hydroxyalkanoate-lactide copolymer may be a block copolymer including one or more polyhydroxyalkanoate(PHA) blocks and one or more polylactic acid blocks. As the hydroxyalkanoate-lactide copolymer contains the above-mentioned blocks, it can exhibit the environmental friendliness and biodegradability of polyhydroxyalkanoate and polylactic acid.

The hydroxyalkanoate may be 3-hydroxybutyrate, 4-hydroxybutyrate, 2-hydroxypropionate, 3-hydroxypropionate, medium-chain-length (D)-3-hydroxycarboxylate, 3-hydroxyvalate, 4-hydroxyvalate or 5-hydroxyvalate containing 6 to 14 carbon atoms. Therefore, the hydroxyalkanoate-lactide copolymer may be 3-hydroxybutyrate-lactide copolymer, 4-hydroxybutyrate-lactide copolymer, 2-hydroxypropionate-lactide copolymer, 3-hydroxypropionate-lactide copolymer, 4-hydroxyvalate-lactide copolymer or 5-hydroxyvalate-lactide copolymer. For example, the hydroxyalkanoate-lactide copolymer may be 3-hydroxypropionate-lactide copolymer to improve flexibility and mechanical properties, etc.

The 3-hydroxypropionate-lactide copolymer may be a block copolymer obtained by polymerizing polylactic acid prepolymer and poly(3-hydroxypropionate) prepolymer.

The 3-hydroxypropionate-lactide copolymer exhibits the excellent tensile strength and elastic modulus characteristics possessed by the polylactic acid prepolymer, and also the poly(3-hydroxypropionate) prepolymer lowers the glass transition temperature(Tg), increases flexibility and improves mechanical properties such as impact strength, which can prevent the brittleness properties that polylactic acid has poor elongation and easily cracks.

The polylactic acid prepolymer may be prepared by performing a fermentation or polycondensation of lactic acid.

The polylactic acid prepolymer may have a weight average molecular weight of 1,000 g/mol or more, or 5,000 g/mol or more, or 6,000 g/mol or more, or 8,000 g/mol or more, and 50,000 g/mol or less, or 30,000 g/mol or less. If it is desired to increase the crystallinity of blocks containing repeating units derived from polylactic acid prepolymers in the final prepared block copolymer, the polylactic acid prepolymer preferably has a high weight average molecular weight of more than 20,000 g/mol, or 22,000 g/mol or more, or 23,000 g/mol or more, or 25,000 g/mol or more, and 50,000 g/mol or less, or 30,000 g/mol or less, or 28,000 g/mol or less, or 26,000 g/mol or less.

If the weight average molecular weight of the polylactic acid prepolymer is 20,000 g/mol or less, the crystals of the polymer are small, which makes it difficult to maintain the crystallinity of the polymer in the final prepared block copolymer. If the weight average molecular weight of the polylactic acid prepolymer is more than 50,000 g/mol, the rate of side reactions occurring inside the prepolymer chain becomes faster than the reaction rate between the polylactic acid prepolymers during polymerization.

On the other hand, the term 'lactic acid' as used herein refers to L-lactic acid, D-lactic acid, or a mixture thereof.

The poly(3-hydroxypropionate)prepolymer may be prepared by performing a fermentation or a polycondensation polymerization of 3-hydroxypropionate.

The weight average molecular weight of the poly(3-hydroxypropionate) prepolymer may be 1,000 g/mol or more, or 5,000 g/mol or more, or 8,000 g/mol or more, or 8,500 g/mol or more, and 50,000 g/mol or less, or 30,000 g/mol or less. If it is intended to increase the crystallinity of repeating units derived from poly(3-hydroxypropionate) prepolymer in the final prepared block copolymer, the poly(3-hydroxypropionate) prepolymer preferably has a high weight average molecular weight of more than 20,000 g/mol, or 22,000 g/mol or more, or 25,000 g/mol or more, and 50,000 g/mol or less, or 30,000 g/mol or less, or 28,000 g/mol or less.

As explained for the polylactic acid prepolymer, if the weight average molecular weight of the poly(3-hydroxypropionate) prepolymer is 20,000 g/mol or less, the polymer crystals are small, which makes it difficult to maintain the crystallinity of the polymer in the final prepared block copolymer, and if the weight average molecular weight of the poly(3-hydroxypropionate) prepolymer is more than 50,000 g/mol, the side reaction rate occurring inside the prepolymer chain is higher than the reaction rate between poly(3-hydroxypropionate) prepolymers during polymerization.

That is, at least one of the polylactic acid prepolymer or the poly(3-hydroxypropionate) prepolymer may have a weight average molecular weight of more than 20,000 g/mol and 50,000 g/mol or less.

On the other hand, the lactic acid and 3-hydroxypropionate may be plastic and biodegradable compounds prepared from renewable sources by microbial fermentation, and the block copolymer comprising polylactic acid prepolymer and poly(3-hydroxypropionate) prepolymer formed by polymerizing the same may also exhibit environmental friendliness and biodegradability. For this reason, the biodegradable composition containing the block copolymer may contain a large amount of bio raw materials while exhibiting environmental friendliness and biodegradability.

The 3-hydroxypropionate-lactide copolymer is a block copolymer obtained by polymerizing polylactic acid prepolymer and poly(3-hydroxypropionate) prepolymer. In the block copolymer, a weight ratio of the polylactic acid prepolymer and the poly(3-hydroxypropionate) prepolymer is 95:5 to 50:50, 90:10 to 55:45, 90:10 to 60:40, 90: 10 to 70:30 or 90:10 to 80:20. If the poly(3-hydroxypropionate) prepolymer is included in an excessively small amount relative to the polylactic acid prepolymer, brittleness may increase, and if the poly(3-hydroxypropionate) prepolymer is included in an excessively large amount relative to the polylactic acid prepolymer, the molecular weight is lowered, and processability and heat stability may be reduced.

The 3-hydroxypropionate-lactide copolymer includes one or more poly(3-hydroxypropionate) blocks and one or more polylactic acid blocks as mentioned above, and can exhibit high crystallinity.

For example, the 3-hydroxypropionate-lactide copolymer may have a crystallinity($Xc_{PLA}$) of the polylactic acid block in the copolymer of more than 0 and 50 or less, or a crystallinity($Xc_{P(3HP)}$) of the poly(3-hydroxypropionate) block of 0 to 50, or more than 0 and 50 or less, which is calculated according to the following Equations 1 and 2 using the crystallization temperature and melting temperature measured by differential scanning calorimetry.

Further, the sum of the crystallinity of the polylactic acid block and the crystallinity of the poly(3-hydroxypropionate) block in the copolymer may be 20 to 100, and more specifically, 20 or more, or 30 or more, or 32 or more, and 100 or less, or 70 or less, or 50 or less, or 48 or less.

As the copolymer satisfies the above-mentioned crystallinity, it can improve flexibility and mechanical properties in a well-balanced manner, and can simultaneously exhibit the excellent strength properties of polylactic acid and the excellent elongation properties of poly(3-hydroxypropionate).

On the other hand, if the sum of the crystallinity is too high, biodegradability and processability may decrease, and if the sum of the crystallinity is too low, the strength may decrease.

$$\text{Crystallinity of polylactic acid block}(Xc_{-PLA}) = [(\text{PLA Tm area}) - (\text{PLA Tcc area})]/93.7 \qquad \text{[Equation 1]}$$

in Equation 1, the PLA Tm area is the integral value for the peak at the melting temperature(Tm) of the polylactic acid(PLA) block within the block copolymer measured by differential scanning calorimetry, and the PLA Tcc area is the integral value for the peak at the crystallization temperature(Tcc) of the polylactic acid block within the block copolymer measured by differential scanning calorimetry.

$$\text{Crystallinity of poly(3-hydroxypropionate) block}(Xc_{P(3HP)}) = [(\text{P(3HP) Tm area}) - (\text{P(3HP) Tcc area})]/64 \qquad \text{[Equation 2]}$$

in Equation 2, the P(3HP) Tm area is the integral value for the peak at the melting temperature(Tm) of the poly(3-hydroxypropionate) (P(3HP)) block within the block copolymer measured by differential scanning calorimetry, and the P(3HP) Tcc area is the integral value for the peak at the crystallization temperature(Tcc) of the poly(3-hydroxypropionate) block within the block copolymer measured by differential scanning calorimetry.

Further, the integral value for the peaks at Tm and Tcc means a value obtained by integrating the areas under the peaks representing Tm and Tcc, respectively.

At this time, the differential scanning calorimetry for measuring Tm and Tcc of each block can be performed using a PerkinElmer DSC800 equipment. Further, the sample to be analyzed is heated at a rate of 10°C per minute from 25°C to 250°C under a nitrogen atmosphere, cooled again from 250°C to -50°C at a rate of -10°C per minute, and then again heated from -50°C to 250° at a rate of 10°C per minute, so that an endothermic curve can be obtained and Tm and Tcc can be confirmed.

The hydroxyalkanoate-lactide copolymer has a weight average molecular weight(Mw) of 50,000 to 300,000 g/mol, which is measured using gel permeation chromatography(GPC), and more specifically, it has a weight average molecular weight of 50,000 g/mol or more, 70,000 g/mol or more, or 100,000 g/mol or more, and 300,000 g/mol or less, or 200,000 g/mol or less, or 150,000 g/mol or less. If the weight average molecular weight of the hydroxyalkanoate-lactide copolymer is too small, the overall mechanical properties may decrease significantly, and if the weight average molecular weight is too large, the processing process may be difficult and processability and elongation may be low.

The biodegradable composition according to one embodiment includes the hydroxyalkanoate-lactide copolymer, wherein the copolymer may be included, for example, in an amount of 3 to 40% by weight based on the total 100% by weight of the biodegradable composition, and more specifically, it may be included in an amount of 3% by weight or more, 5% by weight or more, or 7% by weight or more, or 40% by weight or less, 35% by weight or less, and 30% by weight or less.

If the hydroxyalkanoate-lactide copolymer is included in an excessively small amount in the biodegradable composition, the tensile properties, such as Young's modulus and yield tensile strength may be reduced, and if the hydroxyalkanoate-lactide copolymer is included in an excessively large amount in the biodegradable composition, the elongation may be lowered.

The weight ratio of the hydroxyalkanoate-lactide copolymer and polybutylene adipate terephthalate(PBAT) contained in the biodegradable composition may be 5:95 to 50:50, 5:95 to 40:60, or 10:90 to 30:70.

If the polybutylene adipate terephthalate(PBAT) is included in an excessively small amount compared to the hydroxyalkanoate-lactide copolymer, the elongation may be lowered, and if the polybutylene adipate terephthalate(PBAT) is included in an excessively large amount compared to the hydroxyalkanoate-lactide copolymer, the tensile properties such as Young's modulus and yield tensile strength may deteriorate.

According to another embodiment of the present invention, there is provided a biodegradable film comprising: polybutylene adipate terephthalate(PBAT), a thermoplastic starch, and polybutylene adipate terephthalate(PBAT) grafted with starch maleate.

The polybutylene adipate terephthalate(PBAT), the thermoplastic starch, and the polybutylene adipate terephthalate(PBAT) grafted with starch maleate, and the weight ratio between them is as described above for the biodegradable composition. Further, the biodegradable film may include a hydroxyalkanoate-lactide copolymer, and such hydroxyalkanoate-lactide copolymer and its molecular weight are as described above for the biodegradable composition.

Further, the thermoplastic starch may be included in an amount of 10 to 70% by weight, and more specifically, in an amount of 10% by weight or more, 15% by weight or more, 20% by weight or more, or 70% by weight or less, 60% by weight or less and 50% by weight or less, based on the total 100% by weight of the biodegradable film. If the thermoplastic starch is included in an excessively small amount in the biodegradable film, the biodegradation rate may become slow and the tensile properties such as Young's modulus and yield tensile strength may be reduced, and if the thermoplastic starch is included in an excessively large amount in the biodegradable film, the elongation may be lowered.

Further, the polybutylene adipate terephthalate(PBAT) grafted with starch maleate may be included in an amount of 0.1 to 10 parts by weight, and more specifically, in an amount of 0.1 parts by weight or more, 0.2 parts by weight or more, or 0.3 parts by weight or more, or 10 parts by weight or less, 5 parts by weight or less, and 3 parts by weight or less, based on 100 parts by weight of the biodegradable film. When the polybutylene adipate terephthalate(PBAT) grafted with starch maleate is included in an excessively small amount in the biodegradable film, the mechanical properties are not improved, and if the polybutylene adipate terephthalate(PBAT) grafted with starch maleate is included in an excessively large amount in the biodegradable film, the melt viscosity may increase excessively and the formability may be reduced.

Further, the hydroxyalkanoate-lactide copolymer may be included in an amount of 3 to 40% by weight, and more specifically, in an amount of 3% by weight or more, 5% by weight or more, or 7% by weight or more, or 40% by weight or less, 35% by weight or less, and 30% by weight or less, based on a total of 100% by weight of the biodegradable film. If the hydroxyalkanoate-lactide copolymer is included in an excessively low amount in the biodegradable film, the tensile properties such as Young's modulus and yield tensile strength may be reduced, and if the hydroxyalkanoate-lactide copolymer is included in an excessively large amount in the biodegradable film, the elongation may be lowered.

The biodegradable film according to one embodiment may have a tensile strength of 6 MPa or more, 7 MPa or more, 8 MPa or more, 10 MPa or more, 12 MPa or more, or 6 MPa to 30 MPa, which is measured according to ASTM D882-07.

The biodegradable film according to one embodiment may have an elongation at break of 300% or more, 350% or more, 400% or more, 420% or more, 430% or more, 440% or more, 450% or more, or 300% to 700%, which is measured according to ASTM D882-07.

Further, the biodegradable film may have a Young's Modulus of 50 MPa or more, 55 MPa or more, 60 MPa or more, 65 MPa or more, 70 MPa or more, 80 MPa or more, and 50 MPa to 800 MPa, which is measured according to ASTM D882-07.

The maximum tensile strength, elongation at break, and Young's modulus of the biodegradable film, measured in MD (Machine Direction) and TD (Transverse Direction) directions, may each satisfy the above-mentioned numerical ranges.

The thickness of the biodegradable film according to one embodiment may be 10 to 300 $\mu$m, more specifically, 10 $\mu$m or more, 20 $\mu$m or more, 30 $\mu$m or more, or 300 $\mu$m or less, 200 $\mu$m or less, and 150 $\mu$m or less. Since the thickness of the film is within the above-mentioned range, the film may have strong elasticity, excellent handling properties, and satisfactory winding state and unwinding properties of the roll.

If the film thickness is too thin, the tensile strength, tear strength, and elongation may deteriorate, and holes may form or tear in the film during use. If the film thickness is too thick, unit price competitiveness may be reduced.

The biodegradable film can be used as agricultural mulching film, disposable gloves, individual medical packaging, food wrapping papers, garbage bags, or bags for various industrial products.

The method for producing the biodegradable film is not particularly limited, but a melt-kneading method of melt-kneading polybutylene adipate terephthalate(PBAT), polybutylene adipate terephthalate(PBAT) grafted with starch maleate, thermoplastic starch, and/or hydroxyalkanoate-lactide copolymer is used, or the composition can be prepared by uniformly mixing a solution in which each component is dissolved in a solvent, and then removing the solvent.

In the case of the melt-kneading method, the method is not particularly limited, but conventional mixers such as kneaders, roll mills, Banbury mixers, single or twin screw extruders can be used. The temperature of the extruder during melt-kneading may be 150°C to 240°C, 160°C to 220°C, or 170°C to 200°C.

The biodegradable film can be obtained using a composition prepared by a melt-kneading method or the like by conventional film production methods such as the known inflation method, tubular method, and T die casting method. For example, the composition is pelletized and the pellets are dried at 60 to 100°C for 6 hours or more so that the moisture content can be controlled to 1,200 ppm or less, 500 ppm or less, or 200 ppm or less. Subsequently, the pelletized composite can be applied to a release film, then placed in a thermocompressor, to which pressure can be applied to produce a film. At this time, the temperature may be 130°C to 250°C, 150°C to 220°C, or 160°C to 200°C, and the pressure may be 5 MPa to 20 MPa, 8 MPa to 17 MPa, or 10 MPa to 15 MPa.

## ADVANTAGEOUS EFFECTS

According to the present invention, it is possible to provide a biodegradable composition and a biodegradable film containing bio raw materials that have excellent tensile properties such as tensile strength, elongation at break, and Young's modulus while maintaining environmentally friendliness and biodegradability.

## DETAILED DESCRIPTION OF THE EMBODIMENTS

Hereinafter, the invention will be described in more detail with reference to the following examples. However, these examples are presented for illustrative purposes only, and the scope of the invention is not limited thereby in any way.

**Preparation Example 1: Preparation of 3-hydroxypropionate-lactide block copolymer**

**(1) Preparation of polylactic acid prepolymer**

25 g of 85% L-lactic acid aqueous solution was added to a 100 ml Schlenk flask in an oil bath, and the pressure was reduced at 70°C and 50 mbar for 2 hours to remove moisture in L-lactic acid. Then, based on 100 parts by weight of lactate, 0.4 parts by weight of p-toluenesulfonic acid (p-TSA) and 0.1 part by weight of SnCl$_2$ catalyst were added, respectively, and subjected to a melt condensation polymerization reaction at a temperature of 150°C for 12 hours. After the reaction was completed, the reactant was dissolved in chloroform and extracted with methanol to obtain a polylactic acid prepolymer (weight average molecular weight: 8,000 g/mol).

**(2) Preparation of poly(3-hydroxypropionate) prepolymer**

25 ml of 60% 3-hydroxypropionate aqueous solution was added to a 100 ml Schlenk flask in an oil bath, moisture in the 3-hydroxypropionate was removed at 50°C and 50 mbar for 3 hours, and then oligomerization was performed at 70°C and 20 mbar for 2 hours, and then 0.4 parts by weight of p-toluenesulfonic acid (p-TSA) catalyst based on 100 parts by weight of 3-hydroxypropionate was added to a reaction flask, and subjected to a melt condensation polymerization reaction at a temperature of 110°C for 24 hours. After the reaction was completed, the reactant was dissolved in chloroform and extracted with methanol to obtain poly(3-hydroxypropionate) prepolymer (weight average molecular weight: 26,000 g/mol).

**(3) Preparation of block copolymer**

The polylactic acid prepolymer and the poly(3-hydroxypropionate) prepolymer were mixed at a weight ratio of 9:1 and added to a total content of 30 g in a 100 ml Schlenk flask in an oil bath, and then 90 mg of p-toluenesulfonic acid (p-TSA) was added thereto, and annealed at 60°C for 3 hours. They were mixed using an evaporator at 150°C and 0.5 mbar for 24 hours, and subjected to a solid phase polymerization to prepare 3-hydroxypropionate-lactide block copolymer (weight average molecular weight: 130,000g/mol).

On the other hand, the weight average molecular weight of the polylactic acid prepolymer, poly(3-hydroxypropionate)prepolymer, and block copolymer was measured using a gel permeation chromatography(GPC).

**Preparation Example 2: Preparation of thermoplastic starch**

On a dry weight basis, 225 g of corn starch and 75 g of glycerol were mixed in a mixer, then charged into an extruder and compounded. The temperature range of the extruder was set to 80 to 150°C, the screw speed was set to 150 rpm, and the extruded strands were cut with a pelletizer to prepare thermoplastic starch pellets.

**Preparation Example 3: Preparation of polybutylene adipate terephthalate grafted with starch maleate**

20 g of starch and 50 mL of water were added to a 500 mL RBF (Round Bottom Flask), and the mixture was stirred at room temperature, and 50 mL of 2.0 M sodium hydroxide (NaOH) solution was added thereto. Potato starch was used as the starch. The mixture was further stirred and mixed for 2 hours, about 100 g of maleic anhydride was added thereto, and reacted at 65°C for about 5 hours. After completion of the reaction, the temperature was lowered to room temperature, and acetone was added to generate a precipitate. The precipitate was recovered and dried in a vacuum drying oven at 40°C for one day to obtain solid maleated starch.

130 g of polybutylene adipate terephthalate, 33.5 g of maleated starch, and 0.86 g of dicumyl peroxide were added to an internal mixer in order, and reacted at 160°C and 60 rpm for 30 minutes. After drying, the obtained reaction product was pulverized using a cutting mill and recovered.

**<Example and Comparative Example>**

**Example 1: Production of biodegradable film**

On a dry weight basis, 75 g of polybutylene adipate terephthalate (PBAT, Solpol 1000N, SOLTECH), 25.0 g of thermoplastic starch prepared in Preparation Example 2 and 5.0 g of polybutylene adipate terephthalate grafted with starch maleate prepared in Preparation Example 3 were mixed by hand, then charged into an extruder and compounded. The temperature range of the extruder was set to 170 to 190°C, and the screw speed was set to 150 rpm. The extruded strand was cut with a pelletizer to prepare composite pellets. The prepared composite pellets were heated to 180°C to produce a film with a thickness of 15 to 25 $\mu$m using a Film blown unit (BL50T) from Collin.

**Example 2: Production of biodegradable film**

A biodegradable film was produced in the same manner as Example 1, except that 67.5 g of polybutylene adipate terephthalate and 7.5 g of 3-hydroxypropionate-lactide block copolymer prepared in Preparation Example 1 were used instead of 75 g of polybutylene adipate terephthalate.

**Example 3: Production of biodegradable film**

A biodegradable film was produced in the same manner as Example 1, except that 4.0 g of polybutylene adipate terephthalate grafted with starch maleate prepared in Preparation Example 3 was used instead of 5.0 g of polybutylene adipate terephthalate grafted with starch maleate prepared in Preparation Example 3.

**Comparative Example 1: Preparation of biodegradable film**

A biodegradable film was produced in the same manner as Example 1, except that polybutylene adipate terephthalate grafted with starch maleate was not used.

[Table 1]

| (unit: g) | Polybutylene adipate terephthalate | 3-Hydroxypropionate-lactide block copolymer | Thermoplastic starch | Polybutylene adipate terephthalate grafted with starch maleate |
|---|---|---|---|---|
| Example 1 | 75.0 | - | 25.0 | 5.0 |
| Example 2 | 67.5 | 7.5 | 25.0 | 5.0 |
| Example 3 | 75.0 | - | 25.0 | 4.0 |
| Comparative Example 1 | 75.0 | - | 25.0 | - |

**Evaluation**

**1. Evaluation of tensile properties**

The tensile properties of the films of Examples and Comparative Example were evaluated according to ASTM D882-07. The tensile properties include Young's modulus, tensile strength, and elongation at break in MD (Machine Direction) and TD (Transverse Direction), and the results are shown in Table 2 below.

[Table 2]

| | Young's modulus (MPa) | | Tensile strength (MPa) | | Elongation at break (%) | | Tear strength (gf) | |
|---|---|---|---|---|---|---|---|---|
| | MD | TD | MD | TD | MD | TD | MD | TD |
| Example 1 | 54.3 | 51.4 | 15.3 | 14.9 | 497.9 | 586.0 | 146 | 279 |
| Example 2 | 153.6 | 64.2 | 12.2 | 8.8 | 486.2 | 458.2 | 169 | 276 |
| Example 3 | 90.5 | 87.8 | 17.6 | 14.7 | 528.1 | 504.8 | 372 | 364 |
| Comparative Example 1 | 45.6 | 61.86 | 5.2 | 3.5 | 508.8 | 261.2 | 176 | 277 |

According to Table 2, it was confirmed that Examples 1 and 2 exhibited excellent Young's modulus and tensile strength, etc. and also had excellent Young's modulus and tensile strength as compared to Comparative Example 1 not containing polybutylene adipate terephthalate grafted with starch maleate. In addition, it was confirmed that Example 2 further including 3-hydroxypropionate-lactide block copolymer was significantly excellent in Young's modulus and tensile strength, etc. as compared to Comparative Example 1.

**Claims**

1.    A biodegradable composition comprising: polybutylene adipate terephthalate(PBAT), a thermoplastic starch, and polybutylene adipate terephthalate(PBAT) grafted with starch maleate.

2.    The biodegradable composition of claim 1, wherein:
       further comprising hydroxyalkanoate-lactide copolymer.

3.    The biodegradable composition of claim 2, wherein:

the hydroxyalkanoate-lactide copolymer is 3-hydroxypropionate-lactide copolymer.

4. The biodegradable composition of claim 3, wherein:
   the 3-hydroxypropionate-lactide copolymer is a block copolymer obtained by polymerizing a polylactic acid prepolymer and a poly(3-hydroxypropionate) prepolymer.

5. The biodegradable composition of claim 4, wherein:
   at least one of the polylactic acid prepolymer or the poly(3-hydroxypropionate) prepolymer has a weight average molecular weight of more than 20,000 g/mol to 50,000 g/mol.

6. The biodegradable composition of claim 4, wherein:
   a weight ratio between the polylactic acid prepolymer and the poly(3-hydroxypropionate) prepolymer is 95:5 to 50:50.

7. The biodegradable composition of claim 4, wherein:
   the 3-hydroxypropionate-lactide copolymer has a sum of crystallinity of the polylactic acid block and crystallinity a poly(3-hydroxypropionate) block of 20 to 100, when calculated according to Equations 1 and 2:

   [Equation 1]

   Crystallinity of polylactic acid block($Xc_{-PLA}$) = [(PLA Tm area) - (PLA Tcc area)]/93.7

   (in Equation 1, the PLA Tm area is an integral value for a peak at the melting temperature(Tm) of the polylactic acid(PLA) block within the block copolymer measured by differential scanning calorimetry, and the PLA Tcc area is an integral value for a peak at a crystallization temperature (Tcc) of the polylactic acid block within the block copolymer measured by differential scanning calorimetry)

   Crystallinity of poly(3-hydroxypropionate)block($Xc_{\_P(3HP)}$) = [(P(3HP) Tm area) - (P(3HP) Tcc area)]/64     [Equation 2]

   (in Equation 2, the P(3HP) Tm area is an integral value for a peak at a melting temperature(Tm) of the poly(3-hydroxypropionate)(P(3HP)) block within the block copolymer measured by differential scanning calorimetry, and the P(3HP) Tcc area is an integral value for a peak at a crystallization temperature(Tcc) of the poly(3-hydroxypropionate) block within the block copolymer measured by differential scanning calorimetry).

8. The biodegradable composition of claim 2, wherein:
   the hydroxyalkanoate-lactide copolymer has a weight average molecular weight of 50,000 to 300,000.

9. The biodegradable composition of claim 1, wherein:
   the thermoplastic starch comprises at least one selected from the group consisting of rice starch, wheat starch, corn starch, sweet potato starch, potato starch, tapioca starch, cassava starch and modified starch thereof.

10. The biodegradable composition of claim 1, wherein:
    a weight ratio between the thermoplastic starch and the polybutylene adipate terephthalate(PBAT) is 5:95 to 50:50.

11. The biodegradable composition of claim 2, wherein:
    a weight ratio between the hydroxyalkanoate-lactide copolymer and the polybutylene adipate terephthalate(PBAT) is 5:95 to 50:50.

12. The biodegradable composition of claim 1, wherein:
    the polybutylene adipate terephthalate(PBAT) grafted with starch maleate is contained in an amount of 0.1 to 10 parts by weight based on 100 parts by weight of the biodegradable composition.

13. A biodegradable film comprising: polybutylene adipate terephthalate(PBAT), a thermoplastic starch, and polybutylene adipate terephthalate(PBAT) grafted with starch maleate.

14. The biodegradable film of claim 13, wherein:

the biodegradable film has a tensile strength of 6 MPa or more, when measured according to ASTM D882-07.

15. The biodegradable film of claim 13, wherein:
    the biodegradable film has an elongation at break of 300% or more, when measured according to ASTM D882-07.

16. The biodegradable film of claim 13, wherein:
    the biodegradable film has a Young's modulus of 50 MPa or more, when measured according to ASTM D882-07.

## INTERNATIONAL SEARCH REPORT

| International application No. |
|---|
| **PCT/KR2023/007910** |

### A. CLASSIFICATION OF SUBJECT MATTER

**C08L 67/04**(2006.01)i; **C08L 67/02**(2006.01)i; **C08L 3/02**(2006.01)i; **C08J 5/18**(2006.01)i

According to International Patent Classification (IPC) or to both national classification and IPC

### B. FIELDS SEARCHED

Minimum documentation searched (classification system followed by classification symbols)

C08L 67/04(2006.01); C08L 67/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 생분해성(biodegradable), 폴리부틸렌 아디페이트 테레프탈레이트(polybutylene adipate terephthalate, PBAT), 말레인산 전분(maleated starch), 상용화제(compatibilizer), 열가소성 전분(thermoplastic starch, TPS)

### C. DOCUMENTS CONSIDERED TO BE RELEVANT

| Category* | Citation of document, with indication, where appropriate, of the relevant passages | Relevant to claim No. |
|---|---|---|
| X<br>Y | HABLOT, E. et al. Reactive extrusion of glycerylated starch and starch-polyester graft copolymers. European polymer journal. 2013, vol. 49, no. 4, pp. 873-881.<br>　　　See abstract; pages 875-880; and table 3. | 1,9-10,13-16<br>2-8,11-12 |
| Y | KR 10-2021-0111185 A (CJ CHEILJEDANG CORPORATION) 10 September 2021 (2021-09-10)<br>　　　See claims 1 and 8; and paragraphs [0040]-[0133]. | 2-8,11-12 |
| A | RAQUEZ, J. M. et al. In situ compatibilization of maleated thermoplastic starch/polyester melt-blends by reactive extrusion. Polymer Engineering & Science. 2008, vol. 48, no. 9, pp. 1747-1754.<br>　　　See entire document. | 1-16 |
| A | LACKNER, M. et al. Mechanical properties and structure of mixtures of poly (butylene-adipate-co-terephthalate)(PBAT) with thermoplastic starch (TPS). International Journal of Biobased Plastics. 2021, vol. 3, no. 1, pp. 126-138.<br>　　　See entire document. | 1-16 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 September 2023** | **21 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2023/007910** |

### C. DOCUMENTS CONSIDERED TO BE RELEVANT

| Category* | Citation of document, with indication, where appropriate, of the relevant passages | Relevant to claim No. |
|---|---|---|
| A | WOOTTHIKANOKKHAN, J. et al. Preparation of modified starch-grafted poly (lactic acid) and a study on compatibilizing efficacy of the copolymers in poly (lactic acid)/thermoplastic starch blends. Journal of Applied Polymer Science. 2012, vol. 126, no. S1, pp. E388-E395.<br>See entire document. | 1-16 |

Form PCT/ISA/210 (second sheet) (July 2022)

INTERNATIONAL SEARCH REPORT
Information on patent family members

International application No.

**PCT/KR2023/007910**

| Patent document cited in search report | | Publication date (day/month/year) | Patent family member(s) | Publication date (day/month/year) |
|---|---|---|---|---|
| KR 10-2021-0111185 | A | 10 September 2021 | None | |

Form PCT/ISA/210 (patent family annex) (July 2022)

14

**EP 4 455 212 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220070913
- KR 1020230073707